**Europäisches Patentamt**

**European Patent Office**

**Office européen des brevets**

(19)

(11) Veröffentlichungsnummer: **0 291 448**
**B1**

(12) ## EUROPÄISCHE PATENTSCHRIFT

(45) Veröffentlichungstag der Patentschrift:
**27.12.90**

(51) Int. Cl.⁵: **F16B 13/08**, F16B 13/04

(21) Anmeldenummer: **88810190.4**

(22) Anmeldetag: **24.03.88**

(54) Befestigungselement mit Ankerbolzen und Spreizkeil.

(30) Priorität: **27.04.87 DE 3714008**

(43) Veröffentlichungstag der Anmeldung:
**17.11.88 Patentblatt 88/46**

(45) Bekanntmachung des Hinweises auf die Patenterteilung:
**27.12.90 Patentblatt 90/52**

(84) Benannte Vertragsstaaten:
**AT CH DE FR GB LI SE**

(56) Entgegenhaltungen:
**DE-A- 2 829 158**
**DE-A- 3 520 730**
**DE-U- 8 534 738**

(73) Patentinhaber: **HILTI Aktiengesellschaft,**
**FL-9494 Schaan(LI)**

(72) Erfinder: **Herb, Armin, Lärchenstrasse 9,**
**D-8123 Peissenberg(DE)**

(74) Vertreter: **Wildi, Roland, Hilti Aktiengesellschaft**
**Patentabteilung, FL-9494 Schaan(LI)**

**Beschreibung**

Die Erfindung betrifft ein Befestigungselement mit Ankerbolzen und Spreizkeil, wobei der Ankerbolzen im rückwärtigen Bereich mit einem Kopfteil versehen ist und eine sich gegen den vorderen Bereich des Ankerbolzens dessen Umfangskontur nähernde Keilfläche aufweist, entlang welcher der Spreizkeil zur Verspreizung des Befestigungselementes nach dem Lösen einer Verbindung zwischen Spreizkeil und Ankerbolzen verschiebbar ist, und wobei in ungespreiztem Zustand der Spreizkeil die rückwärtige Stirnfläche des Kopfteiles überragt.

Aus der DE-A 2 829 158 ist ein Befestigungselement bekannt, das im wesentlichen aus einem Ankerbolzen und einem Spreizkeil besteht. Der Ankerbolzen verfügt über einen in Setzrichtung weisenden vorderen schaftartigen Bereich mit einer Keilfläche und ein den Ankerbolzen radial überragendes Kopfteil im rückwärtigen Bereich. In ungespreiztem Zustand des Befestigungselementes ist der Spreizkeil mit dem Ankerbolzen lösbar verbunden und überragt diesen nach rückwärts.

Zum Befestigen von Gegenständen an Untergründen wird das Befestigungselement durch eine Bohrung in den Gegenständen hindurch in ein Bohrloch im Untergrund eingeführt, wobei das Kopfteil in Anlage mit den Gegenständen kommt und diese axial auch übersteht. Durch anschliessendes Beaufschlagen des den Ankerbolzen überragenden Spreizkeiles wird die Verbindung zum Ankerbolzen gelöst und eine Verankerung im Untergrund erzielt, indem der Spreizkeil an der Keilfläche des Ankerbolzens aufläuft.

Zum Befestigen von Gegenständen ist aus der DE-A 3 520 730 ein Befestigungselement, bestehend aus einer Spreizhülse und einem Spreiznagel, bekannt. Die Spreizhülse weist einen umlaufenden, trichterförmigen Bereich mit einem daran anschliessenden Flanschteil auf.

Beim Setzen dieses bekannten Elementes läuft der trichterförmige Bereich mit seinem Flanschteil auf dem zu befestigenden Teil auf, so dass aufgrund des dadurch entstehenden Widerstandes eine Relativverschiebung zwischen Spreiznagel und Spreizhülse erfolgt, was zu einer Spreizung der Spreizhülse führt. Ab dieser Spreizung verbleibt die Spreizhülse in ihrer axialen Position mit gegebenenfalls die zu befestigenden Gegenstände überragendem Flanschteil.

Ein weiteres Befestigungselement, das der Befestigung von Gegenständen, insbesondere Isoliermaterial dient, ist aus der DE-U 8 534 738 bekannt. Dieses weitere bekannte Befestigungselement besteht aus einem Befestigungsnagel und einer Hülse, welche rückseitig eine trichterförmige Erweiterung aufweist.

Bei diesem Befestigungselement wird der Befestigungsnagel direkt ohne irgendwelche Verspreizung der Hülse verankert, so dass zum Versenken der Hülse mit ihrer trichterförmigen Erweiterung beliebig grosse Kräfte anwendbar sind.

Nachdem vielfach, beispielsweise beim Befestigen von Holzlatten, ein Versenken des Kopfteiles in den Gegenständen erforderlich ist, liegt der vorliegenden Erfindung die Aufgabe zugrunde, ein Befestigungselement der vorgenannten Art so zu verbessern, dass dessen Kopfteil mit Sicherheit in den Gegenständen ausreichend versenkbar ist.

Erfindungsgemäss wird die Aufgabe durch die kennzeichnenden Merkmale des Anspruches 1 gelöst.

Ein Kopfteil mit sich konisch erweiternder Kontur vermag unter Materialverdrängung in die zu befestigenden Gegenstände einzutauchen. Dem Eintauchen des Kopfteiles wirkt ein zunehmend grösser werdender Eindringwiderstand entgegen.

Zum Setzen des Befestigungselementes wird dieses bis zum Anliegen des Kopfteiles an dem zu befestigenden Gegenstand in das Bohrloch des Untergrundes eingeschoben. Der Spreizkeil wird in Setzrichtung beaufschlagt, wodurch sich dieser zusammen mit dem Ankerbolzen tiefer in das Bohrloch verschiebt. Das Kopfteil taucht dabei in den Gegenstand ein. Gegen Ende des Eintauchens des Kopfteiles übersteigt der Eindringwiderstand die Haltekraft der Verbindung zwischen Spreizkeil und Ankerbolzen, so dass sich die Verbindung löst. Der weiterhin beaufschlagte Spreizkeil dringt unter Relativverschiebung gegenüber dem Ankerbolzen noch tiefer in das Bohrloch ein und läuft dabei an der Keilfläche des Ankerbolzens auf. So kommt es zur Verankerung des Befestigungselementes durch Verspreizen desselben im Untergrund.

Die radial verlaufenden Rippen erstrecken sich nur über einen Teil, des Umfanges des Ankerbolzens und sind in Umfangsrichtung zueinander beabstandet angeordnet. Die Bildung des Kopf teiles durch Rippen bietet herstellungstechnische Vorteile, insbesondere wenn es sich bei dem Ankerbolzen um ein aus Blech geformtes Teil handelt. Der funktionelle Vorteil von Rippen liegt in deren Schneidwirkung beim Eintauchvorgang in den zu befestigenden Gegenstand. Dies führt zu einem sehr kleinen Eindringwiderstand, so dass es nur kleiner Vortriebskräfte bedarf.

Die Stützschulter läuft am Ende des Eintauchens des Kopfteiles an der Oberseite des zu befestigenden Gegenstandes auf, so dass das Befestigungselement an einem weiteren gesamthaften Verschieben in das Bohrloch gehindert ist. Das weitere Beaufschlagen des Spreizkeiles führt zum Lösen der Verbindung zum Ankerbolzen und in der Folge zur geschilderten Verankerung. Die Stützschulter wirkt so unabhängig von der Festigkeit des Materials der zu befestigenden Gegenstände als Anschlag. Die Haltekraft der Verbindung kann somit so gewählt werden, dass sie erst nach erfolgter Anschlagwirkung überschritten wird.

Dies erlaubt grössere Toleranzen bei der konstruktiven Auslegung der Verbindung.

Sollte die Stützschulter die Oberseite des zu befestigenden Gegenstandes nach dem Vortreiben des Befestigungselementes überragen, so kann diese mit einigen Hammerschlägen unter Verformung versenkt werden. Die Stützschulter schafft so eine erhebliche Erhöhung der Überzugswerte, indem der zu befestigende Gegenstand nicht nur vom Kopfteil sondern auch von der Stützschulter gegen den Untergrund gehalten wird.

Die Stützschulter überragt das Kopfteil mit Vorteil in Umfangsrichtung. Dadurch wird eine kleine Anschlagfläche geschaffen, die auch ein Versenken in relativ harte Gegenstände erlaubt. Für besonders weiche Gegenstände ist es zur Erzielung einer grossen Anschlagfläche vorteilhaft, wenn die Stützschulter das Kopfteil radial überragt.

In Weiterbildung der Erfindung ist die Stützschulter an einem den Spreizkeil wenigstens teilweise in Umfangsrichtung umschliessenden Flanschteil angeordnet. Das Flanschteil dient so nicht nur der radialen Führung des Spreizkeiles vor und während des Verankerungsvorganges, sondern trägt auch zur radialen Versteifung des Kopfteiles bei. Zudem dient das Flanschteil als verformbare Biegestelle, die das Versenken der Stützschulter erleichtert.

Zweckmässig ist das Flanschteil sich vom Kopfteil weg trichterförmig öffnend ausgebildet. Das Flanschteil eignet sich so gut zum Versenken, kann aber auch in eine Normalebene zur Achse des Befestigungselementes umgelenkt werden, um plan am zu befestigenden Gegenstand anzugreifen. Zudem führt diese Ausbildung des Flanschteiles zu einer stärkeren radialen Versetzung der Stützschulter radial nach aussen, was insbesondere Vorteile beim Einsatz in Verbindung mit sehr weichen Gegenständen bringt.

Die lösbare Verbindung zwischen Ankerbolzen und Spreizkeil kann durch in Umfangsrichtung verlaufende, den Spreizkeil in entsprechenden Ausnehmungen wenigstens teilweise umgreifende Lappen gebildet sein. Bei Überschreiten der Haltekraft der durch Eingriff der Lappen in die Ausnehmungen geschaffenen Verbindung werden die Lappen von der axial an die Ausnehmungen anschliessenden Kontur des Spreizkeiles radial in die Wandung der Bohrung der Gegenstände ausgelenkt, so dass es zu einer axialen Fixierung der Gegenstände am Ankerbolzen kommt. Dieserart können die Gegenstände ohne Distanzunterlagen in beliebigem Abstand zum Untergrund ausgerichtet und alsdann durch Verankern des Befestigungselementes festgelegt werden.

Die Erfindung wird nachstehend anhand von Zeichnungen, die Ausführungsbeispiele wiedergeben, näher erläutert. Es zeigen:

Fig. 1 ein Befestigungselement in Ansicht, in ungespreizter Stellung;
Fig. 2 eine Ansicht des Befestigungselementes nach Fig. 1, gemäss Sichtpfeil II;
Fig. 3 eine Ansicht des Befestigungselementes nach Fig. 1, gemäss Sichtpfeil III;
Fig. 4 eine Seitenansicht des Befestigungselementes nach Fig. 1;
Fig. 5 den rückwärtigen Bereich einer weiteren Ausführungsform eines Befestigungselementes in Ansicht, in ungespreizter Stellung;
Fig. 6 einen Schnitt durch das Befestigungselement nach Fig. 5, gemäss Schnittverlauf X–X;
Fig. 7 einen Grundriss des Befestigungselementes nach Fig. 5;
Fig. 8 das Befestigungselement nach Fig. 5 im Befestigungseinsatz.

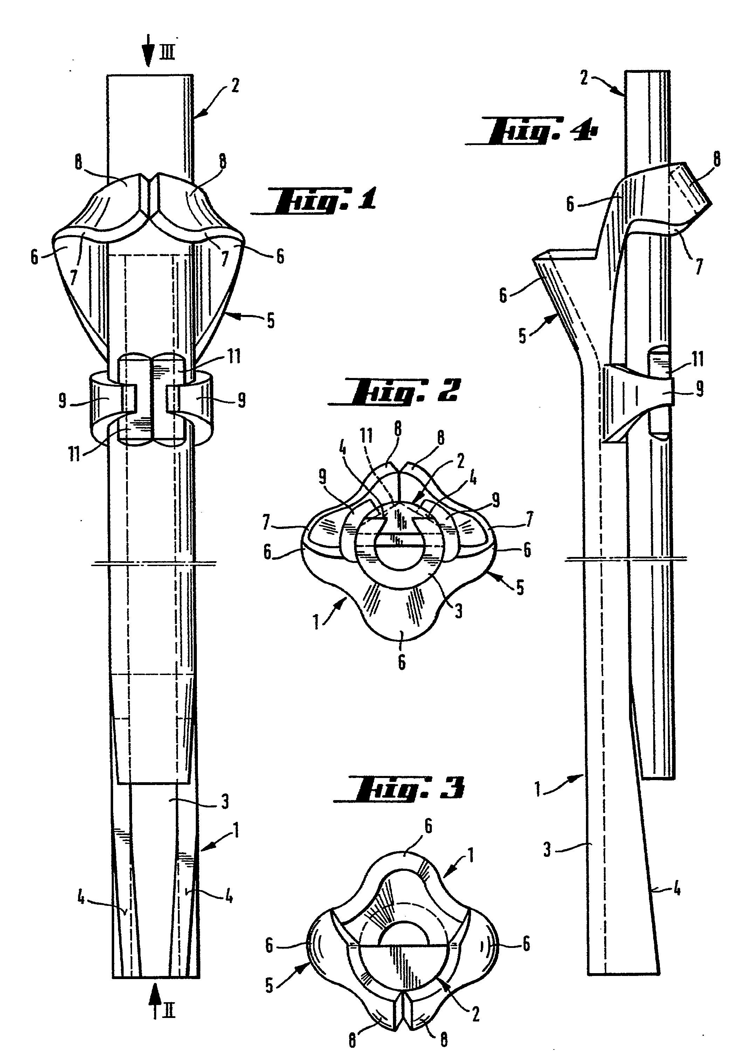

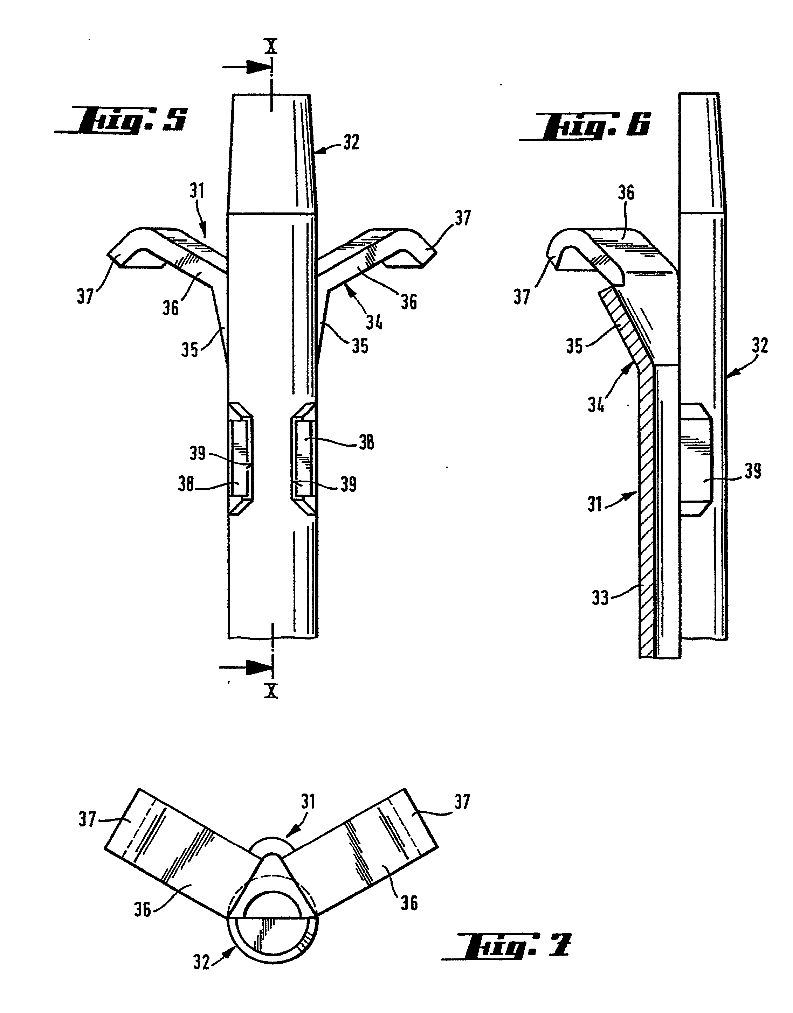

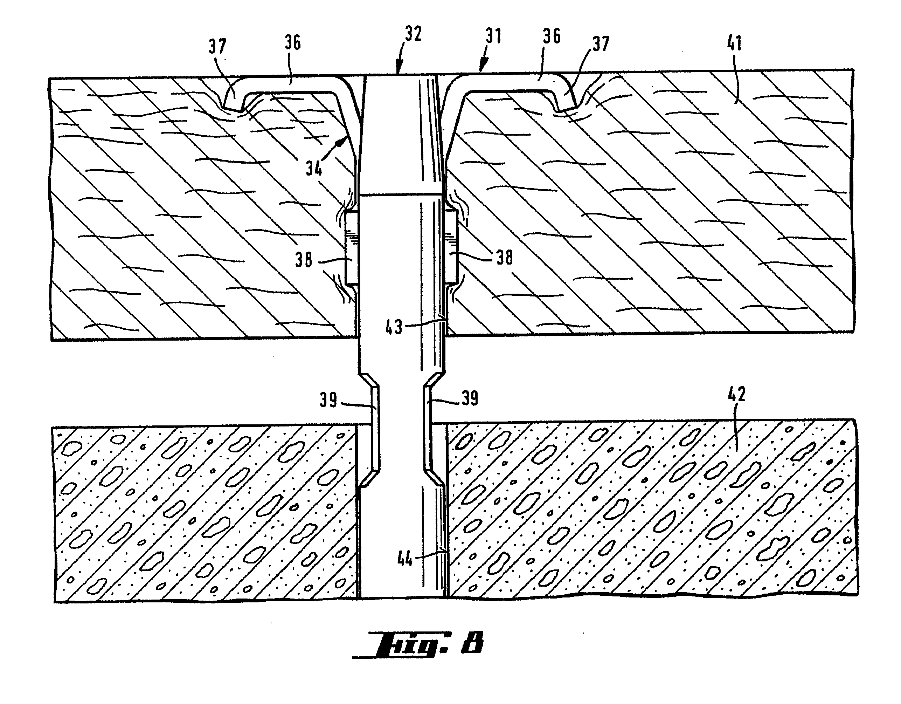

Das Befestigungselement nach den Fig. 1 bis 4 besteht im wesentlichen aus einem insgesamt mit 1 bezeichneten Ankerbolzen und einem insgesamt mit 2 bezeichneten Spreizkeil.

Der Ankerbolzen ist als Blech-Biegeteil ausgebildet und verfügt über einen der Setzrichtung zugewandten vorderen schaftförmigen Bereich 3 mit einer dem Auflaufen des Spreizkeiles 2 dienenden zweiteiligen Keilfläche 4. Der rückwärtige Bereich des Ankerbolzens 1 weist ein insgesamt mit 5 bezeichnetes Kopfteil auf. Das Kopfteil 5 besteht aus sich über einen Teil des Umfanges erstreckenden Rippen 6, deren vom Zentrum des Ankerbolzens 1 abgewandte Längsflanken eine zur rückwärtigen Stirnfläche hin konisch erweiternde Kontur bilden.

An das Kopfteil 5 schliesst sich rückwärtig eine insgesamt mit 7 bezeichnete zweiteilige Stützschulter an, welche in Axialprojektion das Kopfteil 5 in Umfangsrichtung überragt. Die Stützschulter 7 wird von einem Flanschteil 8 getragen, welches den Spreizkeil 2 in Umfangsrichtung teilweise umschliesst und durch zwei aufeinander zugerichtete Finger gebildet ist.

Der Ankerbolzen 1 steht mit dem Spreizkeil 2 in lösbarer Verbindung. Die Verbindung ist durch in Umfangsrichtung gebogene Lappen 9 des Ankerbolzens 1 geschaffen, deren Enden in axial begrenzte Ausnehmungen 11 am Spreizkeil 2 eingreifen.

Auch bei der Ausführungsform nach den Fig. 5 bis 8 verfügt das Befestigungselement über einen insgesamt mit 31 bezeichneten Ankerbolzen und einen insgesamt mit 32 bezeichneten Spreizkeil. Der vordere Bereich des Ankerbolzens 31 und des Spreizkeiles 32 ist analog dem Ankerbolzen 1 und dem Spreizkeil 2 gemäss Fig. 1 und 4 ausgebildet. An einen schaftförmigen vorderen Bereich 33 des Ankerbolzens 31 schliesst sich rückwärtig ein insgesamt mit 34 bezeichnetes Kopfteil an, das eine nach rückwärts konisch sich erweiternde Kontur aufweist und durch zwei Rippen 35 gebildet ist. Das Kopfteil 34 wird nach rückwärts von einem sich trichterförmig öffnenden Flanschteil 36 überragt, das durch an die Rippen 35 angeformte Fortsätze gebildet ist. Das Flanschteil 36 trägt radial nach aussen weisende Stützschultern 37. Nach vorne hin schliessen sich an das Kopfteil 34 in Umfangsrichtung verlaufende Lappen 38 an, die in Ausnehmungen 39 des Spreizkeiles 32 einragen.

Das Befestigungselement dient dem Festlegen einer Holzlatte 41 an einem Untergrund 42, wobei ein wählbarer Abstand zwischen der Holzlatte 41 und dem Untergrund 42 einstellbar ist, wie dies die Fig. 8 zeigt.

Für das Einführen des Befestigungselementes ist die Holzlatte 41 mit einer Bohrung 43 und der Untergrund 42 mit einem Bohrloch 44 versehen. Nach dem Einführen des Befestigungselementes bis zum Auflaufen des Kopfteiles 34 an der äusseren Mündung der Bohrung 43 werden dem Spreizkeil 32 Hammerschläge vermittelt. Da der Spreizkeil 32 durch die Lappen 38 mit dem Ankerbolzen 31 verbunden ist, kommt es so zu einem gemeinsamen weiteren Einschieben des Befestigungselementes in das Bohrloch 44, wobei das Kopfteil 34 unter Materialverdrängung in die Holzlatte 41 eintaucht. Am Ende des Eintauchvorganges des Kopfteiles 34 läuft die Stützschulter 37 an der Oberseite der Holzlatte 41 auf. Dies verhindert ein weiteres Verschieben des Ankerbolzens 31 in das Bohrloch 44, so dass die weiteren Hammerschläge ein Ausrücken der Lappen 38 aus den Ausnehmungen 39 bewirken. Die Lappen 38 dringen so radial in die Wandung der Bohrung 43 ein und schaffen eine axiale Festlegung der Holzlatte 41 gegenüber dem Ankerbolzen 31. Durch nun noch mögliches axiales Verschieben des Ankerbolzens 31 lässt sich der gewünschte Abstand zwischen Holzlatte 41 und Untergrund 42 einstellen. Erst das anschliessende Vortreiben des Spreizkeiles 32 gegenüber dem Ankerbolzen 31 führt zu einem Auflaufen an der Keilfläche des Ankerbolzens 31 und in an sich bekannter Weise zur Verankerung des Befestigungselementes im Untergrund 42. Ein allfälliges Uebersehen des Flanschteiles 36 oder der Stützschulter 37 kann behoben werden, indem diese durch Hammerschläge unter Umformung in die Holzlatte 41 eingeschlagen werden, wobei das Flanschteil 36 als Biegestelle wirkt.

Die anderen Ausführungsformen der Befestigungselemente werden in gleicher Weise gesetzt.

## Patentansprüche

1. Befestigungselement mit Ankerbolzen (1, 31) und Spreizkeil (2, 32), wobei der Ankerbolzen (1, 31) im rückwärtigen Bereich mit einem Kopfteil (5, 34) versehen ist und eine sich gegen den vorderen Bereich des Ankerbolzens dessen Umfangskontur nähernde Keilfläche (4) auf welcher der Spreizkeil (2, 32) zur Verspreizung des Befestigungselementes nach dem Lösen einer Verbindung (9, 11) zwischen Spreizkeil (2, 32) und Ankerbolzen (1, 31) verschiebbar ist, und wobei in ungespreiztem Zustand der Spreizkeil (2, 32) die rückwärtige Stirnfläche des Kopfteiles (5, 34) überragt, dadurch gekennzeichnet, dass der Kopfteil (5, 34) durch radial verlaufende sich über einen Teil des Umfanges erstreckende Rippen (6, 35) gebildet ist, die eine von der Oberfläche des Ankerbolzens (1, 31) zur rückwärtigen Stirnfläche hin sich konisch erweiternde Kontur aufweisen, und dass am Kopfteil (5, 34) eine den Kopfteil (5, 34) rückwärtig in Axialprojektion überragende Stützschulter (7, 37) vorgesehen ist.

2. Befestigungselement nach Anspruch 1, dadurch gekennzeichnet, dass die Stützschulter (7) das Kopfteil (5) in Umfangsrichtung überragt.

3. Befestigungselement nach Anspruch 1, dadurch gekennzeichnet, dass die Stützschulter (37) das Kopfteil (34) radial überragt.

4. Befestigungselement nach einem der Ansprüche 1 bis 3, dadurch gekennzeichnet, dass die Stützschulter (7, 37) an einem den Spreizkeil (2, 32) wenigstens teilweise in Umfangsrichtung umschliessenden Flanschteil (8, 36) angeordnet ist.

5. Befestigungselement nach Anspruch 4, dadurch gekennzeichnet, dass das Flanschteil (36) sich vom Kopfteil (34) weg trichterförmig öffnend ausgebildet ist.

## Claims

1. Fixing element including anchor bolt (1, 31) and spreading wedge (2, 32), in which respect the anchor bolt (1, 31) is provided in its rearward area with a head section (5, 34), and including a wedge surface (4), its peripheral shape nearing the forward area of the anchor bolt (4), along which the spreading wedge (2, 32) is displaceable for the purpose for spreading the fixing element after release of a connection (9, 11) between spreading wedge (2, 32) and anchor bolt (1, 31), and whereby the spreading wedge (2, 32) in its non-spread state extends beyond the rearward end surface of the head section (5, 34), characterised in that the head section (5, 34) is formed by ribs (6, 35), which extend radially over a section of the periphery, having a contour which extends to conically widen from the surface of the anchor bolt (1, 31) to the rearward face end, and that a support shoulder (7, 37) is provided at the head section (5, 34), which shoulder extends at the rear in the axial projection beyond the head section (5, 34).

2. Fixing element according to claim 1, characterised in that the support shoulder (7) extends beyond the head section (5) in the peripheral direction.

3. Fixing element according to claim 1, characterised in that the support shoulder (37) radially extends beyond the head section (34).

4. Fixing element according to one of the claims 1 to 3, characterised in that the support shoulder (7, 37) is arranged on a flange member (8, 36), which at least partially encloses the spreading wedge (2, 32) in the peripheral direction.

5. Fixing element according to claim 4, characterised in that the flange member (36) is arranged to open funnel-like away from the head section 34.

## Revendications

1. Elément de fixation avec boulon d'ancrage (1, 31) et coin d'expansion (2, 32), le boulon d'ancrage (1, 31) étant muni dans la région postérieure d'une section de tête (5, 34) et présentant une surface de coin (4) qui s'approche du contour périphérique de la section antérieure du boulon d'ancrage et le long de laquelle le coin d'expansion (2, 32) peut être déplacé pour l'écartement de l'élément de fixation après la séparation d'une liaison (9, 11) entre le coin d'expansion (2, 32) et le boulon d'ancrage (1, 31), et le coin d'expansion (2, 32) dépassant, à l'état non écarté, de la face frontale postérieure de la section de tête (5, 34), caractérisé en ce que la section de tête (5, 34) est constituée par des nervures (6, 35) d'extension radiale qui s'étendent sur une partie de la périphérie et présentent un contour s'élargissant de manière conique de la surface du boulon d'ancrage (1, 31) vers la face frontale postérieure, et que sur la section de tête (5, 34) est prévu un épaulement d'appui (7, 37) qui, dans une projection axiale, dépasse en hauteur la section de tête (5, 34) du côté arrière.

2. Elément de fixation selon la revendication 1, caractérisé en ce que l'épaulement d'appui (7) dépasse de la section de tête (5) dans le sens circonférentiel.

3. Elément de fixation selon la revendication 1, caractérisé en ce que l'épaulement d'appui (37) dépasse radialement de la section de tête (34).

4. Elément de fixation selon l'une des revendications 1 à 3, caractérisé en ce que l'épaulement d'appui (7, 37) est disposé sur un élément de bride (8, 36) qui entoure le coin d'expansion (2, 32) au moins partiellement dans le sens circonférentiel.

5. Elément de fixation selon la revendication 4, caractérisé en ce que l'élément de bride (36) est conformé de façon à s'ouvrir en forme d'entonnoir à partir de la section de tête (34).

Fig. 1

Fig. 2

Fig. 3

Fig. 4

Fig: 5

Fig: 6

Fig: 7

Fig. 8